# FASCICULE DE BREVET EUROPEEN

(11) **EP 3 814 291 B1**
(45) Date de publication et mention de la délivrance du brevet: **03.04.2024**
(21) Numéro de dépôt: 19790612.6
(22) Date de dépôt: 27.06.2019
(51) Int. Cl.: C03C 17/34

(54) **VITRAGE MUNI D'UN EMPILEMENT DE COUCHES MINCES AGISSANT SUR LE RAYONNEMENT SOLAIRE ET D'UNE COUCHE BARRIERE**
VERGLASUNG MIT EINEM STAPEL VON DÜNNEN SCHICHTEN, DIE AUF SONNENEINSTRAHLUNG REAGIEREN, UND EINER SPERRSCHICHT
GLAZING COMPRISING A STACK OF THIN LAYERS ACTING ON SOLAR RADIATION AND A BARRIER LAYER

(30) Priorité: 27.06.2018 FR 1855763
(43) Date de publication de la demande: 05.05.2021
(73) Titulaire: Saint-Gobain Glass France, 92400 Courbevoie (FR)
(72) Inventeur: BRALEY, Carole, 60750 CHOISY AU BAC (FR)
(74) Mandataire: Saint-Gobain Recherche
(86) Numéro de dépôt international: PCT/FR2019/051592
(87) Numéro de publication internationale: WO 2020/002845

(56) Documents cités:
- WO-A1-02/24971
- WO-A1-2011/045412
- US-A1- 2007 218 264

## Description

L'invention concerne les vitrages munis d'empilements de couches minces agissant sur le rayonnement solaire, notamment ceux destinés à l'isolation thermique et/ou la protection solaire.

Ce type de vitrage est plus particulièrement adapté pour équiper des bâtiments : en agissant, grâce aux couches minces, sur la quantité d'énergie du rayonnement solaire, il permet d'éviter à l'intérieur des locaux un échauffement excessif en été et contribue ainsi à limiter la consommation d'énergie nécessaire à leur climatisation.

Cette action sur le contrôle solaire est réalisée par l'utilisation d'une couche de dioxyde de titane (TiO2) ayant une épaisseur d'environ 20 à 30nm. Cette couche de dioxyde de titane permet avantageusement de réfléchir la lumière entrant.

Toutefois, il a été mis en évidence que le dépôt de la couche de contrôle solaire directement sur le substrat transparent qu'est la feuille de verre n'est pas optimale. En effet, la couche de contrôle solaire en dioxyde de titane adhère peu sur le substrat transparent de sorte qu'elle se dégrade facilement.

Pour résoudre ce problème, une sous-couche est avantageusement agencée entre le substrat transparent et le couche de contrôle solaire pour permettre à la couche de contrôle solaire de mieux adhérer.

Cette sous-couche est choisie pour avoir une fonction barrière. En effet, durant le ou les traitements thermiques que le substrat va subir, une diffusion d'alcalins se produit et dégrade les performances. Cette sous-couche à fonction barrière permet avantageusement de bloquer cette diffusion alcaline. Cette sous-couche à fonction barrière est par exemple une couche de nitrure de silicium (Si3N4) ayant une épaisseur de 30 à 40nm.

Il est connu de procéder à un traitement ultérieur d'émaillage, qui intéresse tout particulièrement les vitrages utilisés dans les panneaux de parement de façade appelés aussi allèges. En effet, pour opacifier les vitrages en allèges, on a généralement deux voies possibles : soit on dépose une laque sur le verre, que l'on sèche et durcit avec un traitement thermique modéré, soit on dépose un émail.

L'émail tel qu'on le dépose de façon habituelle est composé d'une poudre contenant une fritte de verre (la matrice vitreuse) et des pigments employés comme colorants (la fritte et les pigments étant à base d'oxydes métalliques), et un médium appelé aussi véhicule permettant l'application de la poudre sur le verre et son adhésion avec celui-ci au moment du dépôt. Pour obtenir le revêtement émaillé final, il faut ensuite le cuire.

Or, il a été constaté que le processus émaillage avec un émail sombre de la couche de TiO2 protégée des alcalins avec une couche barrière entraine la cristallisation du TiO2 ce qui génère des contraintes dans la couche et entraine l'apparition d'un halo blanc.

WO-0224971 décrit un verre muni d'une couche fonctionnelle et une couche barrière. Cette couche barrière présente une épaisseur d'au moins 50nm. US20070218264 décrit un substrat transparent ou semi-transparent possédant sur au moins une partie d'au moins une de ses faces un revêtement photocatalytique à base d'oxyde de titane caractérisé en ce que la face revêtue possède un facteur de réflexion lumineuse inférieur à celui d'une face du substrat non revêtu.

### RESUME DE L'INVENTION

Le but de l'invention est alors de résoudre le problème de l'art antérieur en proposant un vitrage dont l'empilement est amélioré pour permettre l'adhésion de la couche fonctionnelle de contrôle solaire tout en limitant sa cristallisation.

L'objet de l'invention est tout d'abord un substrat transparent, notamment en verre, muni d'un empilement de couches minces agissant sur le rayonnement solaire, ledit empilement comprenant au moins une couche fonctionnelle, cette couche fonctionnelle étant associée à au moins une sous-couche barrière, caractérisé en ce que cette sous-couche barrière est une couche de dioxyde de silicium d'épaisseur comprise entre 15 et 25nm.

Selon un exemple, ladite sous-couche barrière de dioxyde de silicium à une épaisseur de 20nm.

Selon un exemple, une surcouche de nitrure de silicium ayant un léger effet miroir est agencée sur la couche fonctionnelle.

Selon un exemple, ladite surcouche de nitrure de silicium ayant un léger effet miroir a une épaisseur comprise entre 20 et 30nm, de préférence égale à 25nm.

Selon un exemple, une surcouche de dioxyde de silicium pour la protection chimique est agencée sur la couche fonctionnelle.

Selon un exemple, ladite surcouche de dioxyde de silicium ayant un effet de protection chimique a une épaisseur comprise entre 5 et 15nm, de préférence égale à 10nm.

Selon un exemple, une surcouche de dioxyde de titane permettant une protection mécanique est agencée sur la couche fonctionnelle.

Selon un exemple, ladite surcouche de dioxyde de titane a une épaisseur comprise entre 1 et 5nm, de préférence égale à 2nm.

Selon un exemple, la couche fonctionnelle est une couche de dioxyde de titane TiO2 d'épaisseur comprise entre 20 et 30nm, préférentiellement 24nm.

L'invention concerne en outre un panneau de parement de façade de type allège incorporant le substrat selon l'invention.

L'invention concerne en outre une façade de bâtiment comprenant une pluralité de panneaux de parement selon l'invention.

L'invention concerne en outre une porte de four comprenant le substrat selon l'invention.

L'invention concernant en outre tout objet utilisant le substrat selon l'invention.

### DESCRIPTION DES FIGURES

D'autres particularités et avantages ressortiront clairement de la description qui en est faite ci-après, à titre indicatif et nullement limitatif, en référence aux dessins annexés, dans lesquels:
- la fig. 1 est une représentation schématique du substrat revêtu selon de l'invention;
- la fig. 2 est une représentation schématique d'une variante du substrat revêtu selon de l'invention;

### DESCRIPTION DETAILLEE

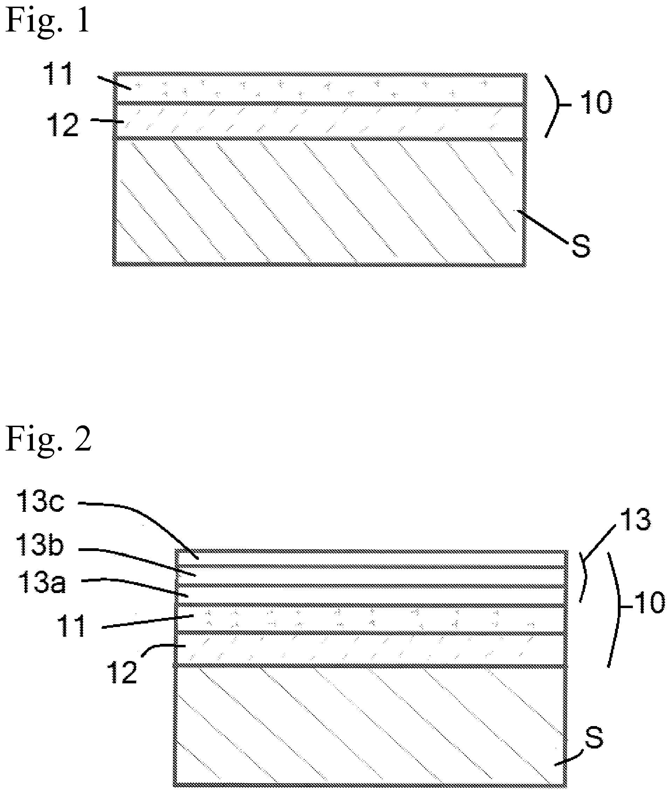

La présente invention concerne un substrat S sur lequel un revêtement 10 est déposé comme visible à la figure 1. Le substrat S est un substrat verrier de type sodocalcique. Ce revêtement 10 peut comprendre plusieurs couches. Ces couches sont utilisées pour obtenir une fonction. Un exemple de fonction est le contrôle solaire. Une telle fonction consiste à avoir une couche qui protège du rayonnement solaire. Dans le cas d'un contrôle solaire, cette fonction est assurée par une couche fonctionnelle 11 de dioxyde de titane TiO2 d'épaisseur comprise entre 20 et 30nm, préférentiellement 24nm. Cette couche de TiO2 permet d'obtenir une réflexion de la lumière comprise entre 25 et 35%, de préférence 30%.

Sur cette couche fonctionnelle, un émail peut être déposé. Cet émail est composé d'une poudre contenant une fritte de verre (la matrice vitreuse) et des pigments employés comme colorants (la fritte et les pigments étant à base d'oxydes métalliques), et un médium appelé aussi véhicule permettant l'application de la poudre sur le verre et son adhésion avec celui-ci au moment du dépôt. Pour obtenir le revêtement émaillé final, une étape de cuisson est opérée.

Selon l'invention, une couche barrière 12 est agencée entre le substrat verrier S et la couche fonctionnelle 11 de dioxyde de titane. Cette couche barrière est utilisée pour empêcher la diffusion des alcalins, en particulier du sodium du substrat verrier. En effet, lors d'un traitement thermique (nécessaire pour l'émaillage notamment), le sodium Na du substrat verrier peut migrer vers la couche déposée.

Astucieusement, cette couche barrière 12 est une couche agencée pour avoir des performances moindres que les couches barrières habituellement utilisées et permettre une légère diffusion du sodium dans la couche fonctionnelle.

Cette couche barrière 12 est une couche d'oxyde de Silicium SiO2. Cette couche d'oxyde de Silicium SiO2 présente une épaisseur comprise entre 15 et 25nm, avec une valeur préférée à 20nm.

Ce mode d'exécution est avantageux en ce qu'il consiste en une couche connue dont les performances contre la diffusion des alcalins, notamment du sodium, du substrat verrier sont volontairement dégradées. Ces performances sont dégradées par une plus faible épaisseur.

Cette dégradation des performances, non souhaitée pour une couche barrière standard, permet une diffusion des alcalins. Or, la diffusion d'alcalins dans la couche fonctionnelle entraine une dégradation des performances de ladite couche mais empêche la cristallisation de la couche fonctionnelle lors de l'émaillage. La couche barrière selon l'invention permet une diffusion des alcalins contenue/limitée de sorte à ne pas dégrader les performances de la couche fonctionnelle tout en permettant une diffusion des alcalins suffisante pour éviter la cristallisation de la couche fonctionnele.

Dans une variante, la couche barrière 12 est déposée sous haute pression. Cette haute pression affecte les propriétés de la couche déposée de sorte que celle-ci devient plus poreuse. Par conséquent, la diffusion des alcalins est facilitée.

Dans une seconde variante visible à la figure 2, le substrat comprend au moins une surcouche 13 déposée sur la couche fonctionnelle. Cette surcouche à base de nitrure de silicium ou d'oxyde de silicium (Si3N4 et SiO2 en abrégé) ou en oxynitrure de silicium (SiON en abrégé, sans préjuger des quantités respectives en Si, O et N) s'est aussi révélée très avantageuse à plusieurs titres: ce type de matériau s'est avéré capable de protéger à haute température les couches de l'empilement de l'invention, notamment vis-à-vis de l'oxydation, en préservant leur intégrité, ce qui a rendu l'empilement selon l'invention bombable/trempable dans le cas où le substrat porteur de l'empilement est en verre et qu'on veut lui faire subir un tel traitement thermique après dépôt des couches: la modification des propriétés optiques induites par un traitement thermique du type trempe, est faible avec une transmission lumineuse et un aspect en réflexion extérieure suffisamment peu modifiés pour ne pas être significativement perceptibles à l'oeil humain.

Cette surcouche 13 peut être composée d'une multitude de couches déposées les unes sur les autres. Une configuration consiste à avoir une première couche 13a de nitrure de silicium Si3N4 dont l'épaisseur est comprise entre 20 et 30nm, de préférence égale à 25nm. Cette couche participe à l'effet miroir.

Sur cette couche de nitrure de silicium, une couche d'oxyde de silicium 13b est déposée. Cette couche d'oxyde de silicium présente une épaisseur comprise entre 5 et 15nm, de préférence égale à 10nm. Cette coche d'oxyde de Silicium est une couche de protection chimique, notamment contre les acides.

Par-dessus cette couche d'oxyde de silicium, une couche d'oxyde de Titane TiO2 13c est déposée. Cette couche présente une épaisseur comprise entre 1 et 5nm, de préférence égale à 2nm. Cette couche d'oxyde de titane permet d'offrir une protection mécanique.

Bien entendu, ces couches 13a, 13b et 13c peuvent être déposées indépendamment les unes des autres.

Le substrat S selon l'invention peut être utilisé dans diverses applications. Une première application consiste utiliser ce substrat pour la réalisation de panneau de verre, par exemple du type allège, pour façade. Une seconde application consiste à utiliser ce substrat pour la réalisation de porte de four.

Bien entendu, ce substrat sera utilisé dans toutes les applications pour lequel on a besoin d'appliquer un émail noir sur l'empilement déposé sur le substrat.

Bien entendu, la présente invention ne se limite pas à l'exemple illustré mais est susceptible de diverses variantes et modifications qui apparaîtront à l'homme de l'art.

## Revendications

1. Substrat (S) transparent, notamment en verre, muni d'un empilement (10) de couches minces agissant sur le rayonnement solaire, ledit empilement comprenant au moins une couche fonctionnelle (11), cette couche fonctionnelle étant associée à au moins une sous-couche barrière (12), **caractérisé en ce que** cette sous-couche barrière est une couche de dioxyde de silicium d'épaisseur comprise entre 15 et 25nm.

2. Substrat transparent selon la revendication 1, **caractérisé en ce que** ladite sous-couche barrière de dioxyde de silicium à une épaisseur de 20nm.

3. Substrat transparent selon les revendications 1 ou 2, dans lequel une surcouche de nitrure de silicium (13a) contribuant à l'effet miroir est agencée sur la couche fonctionnelle (11).

4. Substrat transparent selon la revendication 3, dans lequel ladite surcouche de nitrure de silicium (13a) a une épaisseur comprise entre 20 et 30nm, de préférence égale à 25nm.

5. Substrat transparent selon l'une des revendications précédentes, dans lequel une surcouche de dioxyde de silicium (13b) pour la protection chimique est agencée sur la couche fonctionnelle.

6. Substrat transparent selon la revendication 5, dans lequel ladite surcouche de dioxyde de silicium (13b) a une épaisseur comprise entre 5 et 15nm, de préférence égale à 10nm.

7. Substrat transparent selon l'une des revendications précédentes, dans lequel une surcouche de dioxyde de titane (13c) ayant un effet de protection mécanique est agencée sur la couche fonctionnelle.

8. Substrat transparent selon la revendication 7, dans lequel ladite surcouche de dioxyde de titane a une épaisseur comprise entre 1 et 5nm, de préférence égale à 2nm.

9. Substrat transparent selon l'une des revendications précédentes, dans lequel la couche fonctionnelle est une couche de dioxyde de titane TiO2 d'épaisseur comprise entre 20 et 30nm, préférentiellement 24nm.

10. Panneau de parement de façade de type allège incorporant le substrat selon l'une des revendications précédentes.

11. Façade de bâtiment comprenant une pluralité de panneaux de parement selon la revendication précédente.

12. Porte de four comprenant le substrat selon l'une des revendications 1 à 9.

## Patentansprüche

1. Transparentes Substrat (S), insbesondere aus Glas, das mit einer Stapelung (10) von Dünnschichten versehen ist, die auf die Sonnenbestrahlung ansprechen, die Stapelung umfassend mindestens eine funktionelle Schicht (11), wobei diese funktionelle Schicht mindestens einer Sperrunterschicht (12) zugeordnet ist, **dadurch gekennzeichnet, dass** diese Sperrunterschicht eine Siliciumdioxidschicht mit einer Dicke zwischen 15 und 25 nm ist.

2. Transparentes Substrat nach Anspruch 1,
**dadurch gekennzeichnet, dass** die Sperrunterschicht aus Siliciumdioxid mit einer Dicke von 20 nm ist.

3. Transparentes Substrat nach Anspruch 1 oder 2, wobei eine Deckschicht (13a) aus Siliciumnitrid, die zu dem Spiegeleffekt beiträgt, auf der funktionellen Schicht (11) angeordnet ist.

4. Transparentes Substrat nach Anspruch 3, wobei die Deckschicht (13a) aus Siliciumnitrid eine Dicke zwischen 20 und 30 nm, vorzugsweise gleich 25 nm aufweist.

5. Transparentes Substrat nach einem der vorstehenden Ansprüche, wobei eine Deckschicht (13b) aus Siliciumdioxid für den chemischen Schutz auf der funktionellen Schicht angeordnet ist.

6. Transparentes Substrat nach Anspruch 5, wobei die Deckschicht (13b) aus Siliciumdioxid eine Dicke zwischen 5 und 15 nm, vorzugsweise gleich 10 nm aufweist.

7. Transparentes Substrat nach einem der vorstehenden Ansprüche, wobei eine Deckschicht (13c) aus Titandioxid, die einen Effekt eines mechanischen Schutzes aufweist, auf der funktionellen Schicht angeordnet ist.

8. Transparentes Substrat nach Anspruch 7, wobei die Deckschicht aus Titandioxid eine Dicke zwischen 1 und 5 nm, vorzugsweise gleich 2 nm aufweist.

9. Transparentes Substrat nach einem der vorstehenden Ansprüche, wobei die funktionelle Schicht eine Schicht aus Titandioxid TiO2 mit Dicke zwischen 20 und 30 nm, vorzugsweise 24 nm ist.

10. Fassadenverkleidungsplatte der Art Brüstung, die das Substrat nach einem der vorstehenden Ansprüche einschließt.

11. Gebäudefassade, umfassend eine Vielzahl von Verkleidungsplatten nach dem vorstehenden Anspruch.

12. Ofentür, umfassend das Substrat nach einem der Ansprüche 1 bis 9.

## Claims

1. A transparent substrate (S), in particular made of glass, provided with a stack (10) of thin layers acting on solar radiation, said stack comprising at least one functional layer (11), this functional layer being combined with at least one barrier underlayer (12), **characterized in that** this barrier underlayer is a layer of silicon dioxide having a thickness of between 15 and 25 nm.

2. The transparent substrate as claimed in claim 1, **characterized in that** said barrier underlayer of silicon dioxide has a thickness of 20 nm.

3. The transparent substrate as claimed in claim 1 or 2, wherein an overlayer of silicon nitride (13a) contributing to the mirror effect is arranged on the functional layer (11).

4. The transparent substrate as claimed in claim 3, wherein said overlayer of silicon nitride (13a) has a thickness of between 20 and 30 nm, preferably equal to 25 nm.

5. The transparent substrate as claimed in one of the preceding claims, wherein an overlayer of silicon dioxide (13b) for chemical protection is arranged on the functional layer.

6. The transparent substrate as claimed in claim 5, wherein said overlayer of silicon dioxide (13b) has a thickness between 5 and 15 nm, preferably equal to 10 nm.

7. The transparent substrate as claimed in one of the preceding claims, wherein an overlayer of titanium dioxide (13c) having a mechanical protection effect is arranged on the functional layer.

8. The transparent substrate as claimed in claim 7, wherein said overlayer of titanium dioxide has a thickness of between 1 and 5 nm, preferably equal to 2 nm.

9. The transparent substrate as claimed in one of the preceding claims, wherein the functional layer is a layer of titanium dioxide TiO2 having a thickness of between 20 and 30 nm, preferentially 24 nm.

10. A facade cladding panel of spandrel type incorporating the substrate as claimed in one of the preceding claims.

11. A building facade comprising a plurality of cladding panels as claimed in the preceding claim.

12. An oven door comprising the substrate as claimed in one of claims 1 to 9.
